# EUROPEAN PATENT APPLICATION

(11) **EP 2 690 012 A1**
(43) Date of publication of application: **29.01.2014**
(21) Application number: 12400033.2
(22) Date of filing: 27.07.2012
(51) Int. Cl.: B64C 27/26, B64C 27/28, B64C 39/12

(54) **Semi-convertible rotorcraft**

(71) Applicant: Eurocopter Deutschland GmbH, 86609 Donauwörth (DE)
(72) Inventor: Fink, Axel, 86609 Donauwörth (DE); Winkworth, Andrew, 86609 Donauwörth (DE); Weiss, Ambrosius, 80939 München (DE)
(74) Representative: Schmid, Rudolf

(57) **Abstract**

A semi-convertible rotorcraft (1, 61) with a main rotor (10) and a pair of additional smaller propellers (12, 13) providing thrust, with a pair of rear-mounted fixed wings (6, 7, 56, 57) and a pair of front-end mounted canard wings (8, 9, 58, 59) providing additional lift. The main rotor (10) is non-tiltable and arranged at an aft area of the fuselage (2) and the propellers (12, 13) are arranged at the tip ends of the canard wings (8, 9, 58, 59) while being tiltable around a pitch axis (15) perpendicular to the roll axis (19) of the semi-convertible rotorcraft (1, 61).

## Description

The present invention relates to a semi-convertible rotorcraft on the basis of a compound helicopter featuring vertical take-off and high-speed cruise capabilities and more specifically, the invention relates to a semi-convertible rotorcraft on the basis of a compound helicopter with a main rotor providing lift during vertical and forward cruise flight operations, a pair of main wings and canard wings and a pair of additional propulsive devices for lift and thrust during forward cruise flight.

The dominant helicopter configuration in the present time is based on Sikorsky's basic design with a main rotor and an auxiliary tail rotor to counter torque. Said conventional helicopters show excellent hover capabilities but suffer from important limitations in terms of horizontal flight speed. These limitations are associated to two aerodynamic phenomena at the main rotor: the retreating blade stall and the maximum blade tip velocity. In general terms, the lift and thrust force capabilities of a helicopter's main rotor decrease with increasing forward speed.

Regarding the increasing demand for aircrafts with vertical take-off capabilities and high-speed and/or high-range capabilities, numerous attempts have been done to combine the efficiency and performance of fixed-wing aircrafts in forward flight and the advantageous hover and vertical take-off capabilities of conventional helicopters. These attempts have been translated in a wide and diverse variety of hybrid aircraft configurations. Compound helicopters and convertiplanes are basically the most relevant concepts aiming to overcome the horizontal flight deficiencies of pure helicopters by introducing attributes of fixed-wing aircrafts to helicopters. However, said concepts represent a compromise between conventional helicopters and fixed-wing aircrafts. Said concepts have always to be conveniently adapted to the planned aircraft's mission profile.

Compound helicopters are characterized by a lift compounding, a thrust compounding or by a combination of both and basically aim to off-load the rotor from its simultaneous lifting and propulsive duties to allow for higher forward speeds.

A lift compounding entails adding wings to a pure helicopter hence enabling to increase the load factor of the helicopter and to reach a higher maneuverability. This improves the efficiency of the helicopter at moderately high speeds but at the expense of reduced efficiencies at lower forward speeds and in the hover.

A thrust compound implies the addition of auxiliary propulsion devices to helicopters. This has been typically accomplished either by means of a single or a pair of propellers being driven by driveshafts powered by the main turboshaft engines or by the use of additional engines.

A more extended configuration of a compound helicopter includes both the addition of wings and propulsion units. The lift during cruise is simultaneously provided by the main rotor - in powered condition or in autorotation modus - and wings. The compound helicopter hence overcomes the rotor lift limits by means of the wings and the rotor thrust limits by means of the propellers. As a result, the benefit of a higher load factor is obtained along with potential for higher speed. The use of a pair of thrust propellers enables for a simultaneous torque correction.

A wide variety of said compound architectures have been proposed and some of them developed to a more or less level of maturity but never reaching serial production. A typical configuration with two wing-mounted propellers is described in US3105659, US20090321554 and US6513752. The propulsion device can be a single nose-mounted propeller as disclosed in US20050151001 or a single rear-mounted propeller as disclosed in US3241791, CA02316418, US3448946. All said typical configurations feature a pair of main wings located below the main rotor.

A configuration of a compound helicopter, featuring two main wings behind the main rotor and two front-end-mounted canard wings, is described in US 20100065677. This configuration outstands by the lack of a tail boom and the rear position of the propulsion propellers, which results in better comfort by reducing noise and vibrations and increased passenger safety. Moreover, the canard configuration provides for additional lift, which means that the center of lift of the wings is allowed to not coincide with the rotor mast, hence allowing locating the wings far in the rear of the aircraft. The resulting center of lift of the canards, the wings and the main rotor has to be coincident within a certain margin with the center of gravity. The rotor mast itself has still to be close to the center of gravity, meaning somewhere in the middle of the aircraft, with regard to the operation in helicopter modus, the lift being then provided by the main rotor alone. All powerplant devices shall hence be still placed on top of the cabin area.

Canard configurations are not unusual in fixed-wing aircraft design. Depending on the canard design, the canards can have a lifting or a sheer control function. Contrary to typical configurations with aft-tails, lifting canards contribute to the total lift of the aircraft, hence allowing for a significant aft position of the main wings. The center of gravity is located at a significantly aft position. To ensure pitch stability, the lift slope of the canard wing has to be lower than that one of the main wing. An important penalty arises from the aerodynamic interference between the canards and the main wings. From a structural point of view, lifting canard configurations or even tandem wing configurations are deemed to offer important advantages for fixed wing aircrafts.

A compound helicopter based on a tandem wing configuration, meaning the arrangement of a pair of wings on both the helicopter's front end and aft end, has been proposed in US20110114798, the propulsion devices being arranged on the front wings.

A convertiplane is an aircraft capable to fully transform from a helicopter modus to an aircraft modus. The lift during vertical operation is provided by contra-rotating wing-mounted rotors. During horizontal flight the same rotors - now positioned vertically - provide for the forward thrust and the lift is entirely provided by the wings. Different full tilt rotorcraft architectures have been proposed, e.g. showing two wing mounted tilt rotors in WO2008085195, two tandem tilt rotors in DE4422987, three tilt rotors in US20050133662 or four tilt rotors in US3360217.

Three different, unconventional tilt-rotor aircrafts are presented in US 7 584 923 B2: a tilt-rotor aircraft with a pair of tiltable coaxial rotors, a tilt-rotor aircraft with a pair of individually tiltable meshed rotors and a tandem rotor helicopter with meshing, individually and partially tiltable rotors.

The coaxial helicopter with dual, concentric and contra-rotating rotors has the advantage of torque-cancellation, the full power being hence used to provide lift and thrust. Moreover, the retreating blade of one rotor is on the opposite side to the retreating blade of the other rotor, which enables a symmetric total lift distribution allowing higher forward speeds. However, coaxial rotors feature a high complexity of the rotor mechanism, require stiff and heavy masts and feature specific peculiarities in terms of autorotation and rotor interactions. From a performance standpoint, the twin rotor heads of a synchropter cause a drag penalty and the synchropter is not suited for high speed. Although there is no tail rotor there is still a penalty in terms of safety advantage, since the sidewards canted rotors pass close to the ground. Moreover, the canted position of the rotors results in a diminution of the total lift vector and thrust vector, hence leading to an important waste of power. Anyhow, a decisive penalty of the proposed arrangements is expected to arise from the large gyroscopic forces needed to tilt the rotors.

The required power and weight of the powerplant, such as engines, gear box and transmission of fixed wing aircraft is roughly 2 to 3 times less of that one of a rotorcraft having the same MTOW, since a VTOL aircraft needs power to lift its own weight, whereas a CTOL aircraft works against aerodynamic drag only, which is only a portion of its weight.

Convertiplanes convert between a full helicopter mode and a high-speed full aircraft mode, which means that the lift is provided to 100% by the rotors on VTOL mode, and 100% by the wings on horizontal flight. Hence, full tilt convertiplanes are overpowered in the horizontal flight mode, leading to a lower efficiency than conventional fixed wing aircraft. Moreover, the stiff rigid blades, the mechanism to tilt the rotors and the engines and the design of the wings providing 100% of lift during horizontal flight lead to an increase in weight which further reduces the efficiency in both horizontal and vertical flight mode. The design of the blades represents in addition a compromise between both flight modes thus accepting certain efficiency losses.

Typically, the architecture of the aforementioned helicopters with a single main rotor features a main body comprising the cabin, the main rotor and the powerplant with engines, gear box and transmission being placed somewhere on top of the main body above the cabin. The center of gravity is located close to the rotor mast. Since the distribution of payload, passengers and fuel influence the mass distribution and the balance of the helicopter, special care has to be paid to maintain its location within specific limits. As a result critical system masses are located on top of the passenger area close to the rotor mast. With regard to the crashworthiness requirements the cabin has to be stiff and strong enough to react without detrimental deformation of the cabin to the severe inertia forces arising from a crash with a predominant vertical velocity component. This requirement leads to main frames being required to sustain considerable stresses which translate to a high structural weight and reduced inner cabin space. For typical compound configurations with shouldered wings, this fact is aggravated by the additional mass of the wings and the wing-mounted tractor rotors being fixed at the top of the fuselage. Moreover, conventional compound helicopters featuring wing-mounted propellers located beneath the main rotor, the propellers must operate in the turbulent downwash from the main rotor which results in a reduced efficiency and increases noise generation. The location of unducted wing-mounted propellers in the cabin area leads furthermore to serious penalties in terms of passenger safety. In case of a blade separation, the blade has to be retained by additional structural features to avoid a cabin penetration additionally increasing the structural weight. Open rotors being placed close to the doors represent further serious safety penalties during boarding and increase the noise exposure in the cabin.

In the following "semi-convertible rotorcraft" is used as generic term for compound helicopters with features of convertiplanes.

It is an object of the invention to provide a semi-convertible rotorcraft with good hover and high-speed capabilities whilst achieving an optimal structural architecture by minimizing structural weight, increasing comfort and improving safety. The hover capabilities shall be better than conventional full tilt rotor concepts and the high-speed capabilities better than conventional compound helicopters.

According to the invention a semi-convertible rotorcraft comprises a fuselage with a cabin inside, a rear end and a front end. A longitudinal roll axis extends through the rear end and the front end. Said roll axis and a pitch axis transversal to said roll axis define an essentially horizontal plane of the semi-convertible rotorcraft. At least one power plant is arranged inside the fuselage and a main rotor is mounted on top of the fuselage in a plane essentially parallel to the horizontal plane of the semi-convertible rotorcraft. The main rotor is driven by said power plant. At least one pair of fixed main wings are provided, each fixed main wing of at least one pair being attached to opposed sides of the fuselage in a further essentially horizontal plane. At least one pair of canard wings is provided, each canard wing of at least one pair being attached to opposed sides in the essentially horizontal plane through the front end of the fuselage. At least two propulsive devices are provided, such as propellers or jets; said at least two propulsive devices providing thrust and anti-torque; each propulsive device being opposed to another of said at least two propulsive devices relative to the fuselage in the essentially horizontal plane. The inventive semi-convertible rotorcraft concept combines advantages of compound helicopters with advantages of convertiplanes. According to the invention the power plant is arranged longitudinally in a rearward portion inside the fuselage behind the cabin and in a bottom half of said fuselage and each of said at least two propulsive devices is mounted on a portion of one respective front-end mounted canard wing distal to the fuselage. Each of said at least two propulsive devices are independently tiltable around the pitch axis with respect to the fuselage. An advantage of the semi-convertible rotorcraft concept of the present invention is the satisfaction of the simultaneous demand for high-speed, high-range and vertical take-off capabilities and the herewith associated demand for a high operative efficiency of the semi-convertible rotorcraft. The semi-convertible rotorcraft concept of the present invention does not tilt the main rotors (and its engines) but small separate propulsive devices, such as rotors, i. e. without engines, providing only the power portion needed for forward thrust and pitch stability in the hover. The power portion for forward thrust shall correspond to about 50% of the total power required for Vertical Take-Off and Landing (VTOL). The power required by the tilt propulsive devices of the inventive semi-convertible rotorcraft concept on the hover for pitch stability and anti-torque shall be considerably less than the power required for forward flight. This is the case for a CofG located between the main rotor and the tilt rotors but very close to the main rotor which shall result when having major system masses, such as powerplant, fuel, etc. and main wings, arranged at the aft portion of the aircraft. With increasing speed at forward flight of the inventive semi-convertible rotorcraft, the lift is provided by both, the main rotor and the wings, namely the canard and main wings. At forward flight the main rotor of the inventive semi-convertible rotorcraft may be considerably less powered than in the hover, which shall be accomplished by reducing the speed of rotation and pitch, or the main rotor may be operated in an unpowered autorotation mode. As the main rotor remains edge-on to the airflow, the effect of retreating blade stall is minimized, drag and vibrations are reduced hence allowing for high-speed operations. Better flight transition capabilities between the hover mode and horizontal flight mode are expected for the inventive semi-convertible rotorcraft in comparison to full-tilt concepts.

For the inventive semi-convertible rotorcraft concept, only the portion with the propulsive devices needed for thrust is tilted, which reduces the complexity and the secondary mass increase associated to the tilting mechanism in comparison to a full tilting concept. Thus, the wings with the propulsive devices can be smaller and less heavy than in a full tilt concept. Moreover, the main rotor blades are less heavy by having conventional lift-optimized configurations but being adequately adapted to high-speed requirements. Contrary to typical full tilt configurations, the front propulsive devices of the inventive semi-convertible rotorcraft concept can be fully tiltable on ground. Hence, the inventive semi-convertible rotorcraft concept shows additional short-take-off capabilities and good taxiing capabilities.

Contrary to typical helicopter architectures, all system masses of the inventive semi-convertible rotorcraft concept, such as powerplant, gear, oil, hydraulics, avionics, battery, fuel, ... are not allocated above the airframe but at the very aft and close to the bottom of the fuselage. Doing so, the center of gravity of the inventive semi-convertible rotorcraft concept moves rearward and less inertia forces have to be transferred through the fuselage in the case of a vertical crash, hence allowing for a more efficient design of the fuselage with the passenger cabin and increasing safety. The low position of the center of gravity allows for better roll stability of the inventive semi-convertible rotorcraft concept. In case of a major horizontal crash component the most important inertia loads, e. g.' from the engine(s) and main gear, shall act alongside the longitudinally stiff lower floor area of the inventive semi-convertible rotorcraft concept. In addition, the systems, e. g. the engine(s) and main gear of the inventive semi-convertible rotorcraft concept are much better accessible for maintenance. A suitable firewall separates the aft systems area from the passenger cabin. Since there is no additional structure above the cabin for the housing of the powerplant the main rotor comes closer to the fuselage, a lower longitudinal masking and hence lower drag is excited during forward flight, which further improves the high-velocity performance of the inventive semi-convertible rotorcraft concept.

Since the total lift of the inventive semi-convertible rotorcraft concept in the hover is provided by a main rotor longitudinally far apart from the two front-end tilt propulsive devices, there exists the possibility of a better compensation of variable horizontal positions of the center of gravity as a function of payload distribution and fuel consumption contrary to conventional helicopters having to ensure a center of gravity allocated within specific narrow limits.

The propulsive devices of the present invention are allocated at the very front-end of the fuselage. Having no propulsive devices such as rotors aside from the passenger cabin, a better passenger safety is ensured and less noise is generated in the passenger cabin. In the case of a blade separation of the front-end rotors, the blade does not penetrate into the passenger cabin hence eliminating the need of additional and heavy structural blade retention approaches.

Due to the position of the main rotor of the inventive semi-convertible rotorcraft concept within a rear portion of the fuselage the downwash masking and the associated download is less, or at least not larger than for conventional helicopters. Due to the absence of a conventional tail boom, the tail shake effect is fully eliminated for the inventive semi-convertible rotorcraft concept. The downwash masking can be further reduced by using large flaps on the wings of the inventive semi-convertible rotorcraft concept which are hinged down during hovering.

The inventive semi-convertible rotorcraft concept is suitable for inner-pressurized high-attitude operations. The firewall, the rear pressure bulkhead and the rear main frame can be integrated into a single structural element.

In a preferred embodiment of the invention, the propulsive devices provide additional lift during hover and vertical flight operations, their respective thrust vector being oriented at angles within a range of 60° to 120° with respect to the inventive semi-convertible rotorcraft's longitudinal axis. During horizontal flight the thrust vectors of the propulsive devices are oriented to angles between 0° and ±30° with respect to the inventive semi-convertible rotorcraft's longitudinal axis, hence providing for 70% to 100% of the forward thrust.

In a further preferred embodiment of the invention, the inventive semi-convertible rotorcraft's center of gravity is allocated ahead of a rotor mast of the main rotor. For cruise flight mode the collective center of lift resulting from the canard wings, the main wings and the main rotor are coincident with the center of gravity. For vertical flight mode and hover operations the collective center of lift resulting from the tilted propulsive devices and the main rotor are coincident with the center of gravity.

In a further preferred embodiment of the invention, the anti-torque for vertical flight mode and hover operations is provided by propulsive devices with essentially equal performance but opposed tilt angles to generate two equal lift components and two oppositely directed horizontal thrust components leading to a couple that counteracts the main rotor torque. Hence, no conventional tail rotor is needed for the inventive semi-convertible rotorcraft concept.

In a further preferred embodiment of the invention, the propulsive devices are tiltable around a transverse axis with respect to the canard wings, the latter being fixedly mounted on the fuselage. In an alternative embodiment of the inventive semi-convertible rotorcraft concept, the propulsive devices are fixedly mounted to the canard wings, the latter being tiltable with respect to the fuselage along said transverse axis. Tilting the propulsive devices around fixed canard wings has the advantage of less loaded tilt mechanisms and less complexity of the transition process between vertical and horizontal flight modes, whereas tilting the propulsive devices/canard wings assembly offers advantages for an open rotor configuration as propulsive device of the inventive semi-convertible rotorcraft concept.

In a further preferred embodiment of the invention, vertical fins are arranged at the end portion of the fixed main wings in order to provide for improved yaw stability and allowing for passive, aerodynamically induced anti-torque during horizontal flight operations. In view of the rearward position of the center of gravity, the efficiency of the fins is improved with swept-back wing configurations, by increasing the fin area or by shifting the fins further rearwards.

In a further preferred embodiment of the inventive semi-convertible rotorcraft concept, the main wings are allocated at least partially below the fuselage. A wing box volume may be used as additional fuel tank, hence allowing for lower longitudinal deviations of the center of gravity as a function of fuel consumption, and/or for the integration of a retractable undercarriage. However, especially for main wings having anhedral, the undercarriage can be fixed and integrated to the main wing, contributing with a suitable aerodynamic shape to improved yaw stability of the inventive semi-convertible rotorcraft concept. In case of a crash, the main wings of the inventive semi-convertible rotorcraft can be designed to contribute in absorbing kinetic energy.

In an alternative embodiment of the invention, the main wings are arranged behind the fuselage, being connected to each other by a central wing box and being attached to the fuselage by means of longitudinal booms. Since the main wing area is less and the position of the main wings is further backwards, the download from the main rotor is less and the efficiency of the vertical fins is larger. The center of gravity of the inventive semi-convertible rotorcraft may be allocated further backwards, hence compensating any associated extra weight of larger canard wings.

In a further preferred embodiment of the invention the propellers of the propulsive devices are ducted. Alternative embodiments may feature ducted fans or open rotors.

In a further preferred embodiment of the invention, the propulsive devices are powered by the engines and the gear box of the powerplant by means of drive shafts extending from the powerplant located at the rear of the fuselage to the canard wings, the drive shafts being housed underneath a floor of the passenger cabin.

In a further alternative embodiment of the invention, the propellers of the propulsive devices are powered by electrical motors and corresponding generators are housed in the vicinity of the powerplant.

Preferred embodiments of the invention are outlined by way of example with the following description with reference to the attached drawings.
- Figure 1 shows a top overall view of a semi-convertible rotorcraft according to the invention;
- Figure 2 shows a side overall view of the semi-convertible rotorcraft according to the invention,
- Figure 3 is a side view of a front section of the semi-convertible rotorcraft according to Figure 2,
- Figure 4 is a further side view of the front section of the semi-convertible rotorcraft according to Figure 2,
- Figure 5 is a top view of the front section of the semi-convertible rotorcraft according to Figure 1,
- Figure 6 is a front view of the semi-convertible rotorcraft according to the invention,
- Figure 7 is a front view of the front section of the semi-convertible rotorcraft according to Figure 3,
- Figure 8 is a schematic side view of the semi-convertible rotorcraft according to the invention,
- Figure 9 is a further schematic side view of the semi-convertible rotorcraft according to the invention, and
- Figure 10 is a top view of another embodiment of the semi-convertible rotorcraft according to the invention.

The figures show three mutually orthogonal directions X, Y, and Z forming a three-dimensional frame of reference XYZ. A "longitudinal" direction X corresponds to the roll axis 19 inherent to the semi-convertible rotorcraft 1. Another direction Y said to be "transverse" is perpendicular to the roll axis 19 and corresponds to the pitch axis 15 inherent to the semi-convertible rotorcraft 1. The X-Y plane is considered to be "horizontal". The third direction Z is the yaw axis 20 inherent to the semi-convertible rotorcraft 1, oriented perpendicular with respect to the X-Y plane. Corresponding features of the invention are referred to with the same references throughout the figures shown.

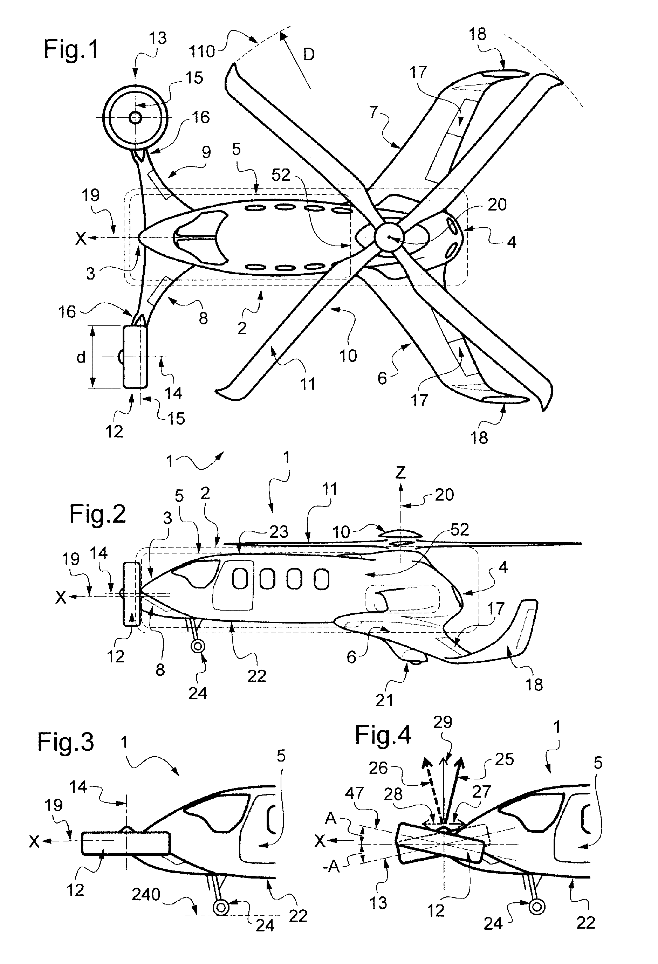

According to Figure 1 the semi-convertible rotorcraft 1 comprises a main body as fuselage 2 with a cabin 5 inside. The fuselage 2 extends longitudinally along the roll direction X from a front end 3 to a rear end 4 and the cabin 5 extends from the front end 3 of the fuselage 2 to a cabin rear end 52 allocated in a rear portion closer to the rear end 4 than to the front end 3 of the fuselage 2.

A pair of main wings 6 and 7 are fixed to the fuselage 2 close to the rear end 4 of the semi-convertible rotorcraft 1, i. e. at least partly longitudinally behind the cabin 5 in the rear portion, one fixed main wing 6, 7 extending from each side essentially in the horizontal plane of the semi-convertible rotorcraft 1. The main wings 6, 7 are provided with control surfaces 17 at their trailing edges and with vertical tails 18 at their tips, the latter providing for yaw stability and anti-torque during horizontal flight. In order to increase efficiency, the vertical tails 18 extend rearwards and upwards from the wing tip portions. In hover and vertical flight operations the control surfaces 17 are foldable so as to minimize download from a main rotor 10 or to influence the effective angle of attack of the wings 6, 7 during transition from vertical to horizontal flight mode. During horizontal flight modes the control surfaces 17 are usable as flaps or ailerons.

The main rotor 10, comprising a mast 100 (Fig. 2) and a plurality of rotor blades 11, is arranged within the rear portion of the fuselage 2 behind the rear end 52 of the cabin 5, close to the rear end 4 of the fuselage 2, i. e. the mast 100 is in the rear 1/3, rear ¼ or rear 1/5 of the entire length of the fuselage 2 from the front end 3 to the rear end 4. The main rotor 10 is arranged longitudinally behind the semi-convertible rotorcraft's center of gravity.

Close to the front end 3 of the fuselage 2, two canard wings 8, 9 are mounted to the fuselage 2, these canard wings 8, 9 extending at each side in the horizontal plane of the fuselage 2. The canard wings 8, 9 feature a smaller surface than the main wings' 6, 7 surface. The canard wings 8, 9 are profiled for additional lift during horizontal flight and compensate the eccentric longitudinal position of the main rotor 10 with respect to the semi-convertible rotorcraft's center of gravity in the rear end of the fuselage 2.

One propulsive device, such as a propeller 12, 13, rotor, fan or jet, is mounted on each canard wing 8-9 respectively. These propellers 12, 13 each form a smaller, secondary rotor and each is arranged close to a respective tip end 16 of one canard wing 8 or 9 distal to the fuselage 2. Each propeller 12, 13 is conceived as a ducted fan or an open propeller 12, 13. The propellers 12, 13 are tiltable around the pitch axis 15 with respect to the fixed canard wings 8, 9, tilt mechanisms (not shown) being housed at the tip ends 16 of the canard wings 8, 9.

The left propeller 12 is shown with its thrust vector 14 oriented parallel to the roll axis 19 (X-direction) corresponding to a horizontal flight mode. In the horizontal flight mode the propulsion of both propellers 12, 13 provide all or the major part of the forward thrust. The right propeller 13 is shown with its rotation plane oriented horizontally, the thrust vector hence being parallel to the vertical axis Z. With this orientation, the propellers 12, 13 generate additional vertical lift hence supporting the main rotor 10 and compensating the eccentric longitudinal position of the main rotor 10 with respect to the semi-convertible rotorcraft's center of gravity. The lift portion of the front propellers 12, 13 is in the range of 10% to 30% of the total lift of the semi-convertible rotorcraft 1, said lift portion depending on the relative positions of the main rotor 10 and the propellers 12, 13 with respect to the semi-convertible rotorcraft's center of gravity. The propellers 12, 13 are tiltable independently from each other.

The semi-convertible rotorcraft 1 has the single main rotor 10 defining a rotor disk delimited by a trajectory 110 with a major diameter "D", while each of the propellers 12, 13 feature a diameter "d" which is 2 to 10 times smaller than the major diameter "D" of the main rotor 10.

According to Figure 2 the semi-convertible rotorcraft 1 is in the forward flight mode. The rotation axis and the associated thrust vector 14 of the propellers 12-13 are essentially oriented parallel to the longitudinal roll axis 19 of the semi-convertible rotorcraft 1, i.e. along direction X. The fuselage 2 incorporates the cabin 5 with a bottom area 22 and a top area 23.

The main rotor 10 is arranged on top of the fuselage 2 above the top area 23 at the rear end 4 of the semi-convertible rotorcraft 1, behind the cabin 5 between the aft cabin rear end 52 and the fuselage aft end 4. The rotor mast of the main rotor 10 is essentially parallel to the Z-axis 20 or said rotor mast is inclined with respect to the vertical Z-axis 20 of the semi-convertible rotorcraft 1.

The fixed main wings 6, 7 are arranged close to the rear end 4 of the semi-convertible rotorcraft 1 at least partly longitudinally behind the cabin 5 and partly below the fuselage 2 close to the bottom area 22 of the fuselage 2. The fixed wings 6, 7 feature vertical tails 18 at their tips for yaw stability and anti-torque during horizontal flight. The surfaces of the vertical tails 18 extend rearwards and upwards from the wing tip portions hosting said surfaces.

Below the aft portion of the cabin 5, the semi-convertible rotorcraft 1 includes a rear, non-retractable, wheeled undercarriage 21, which is fixedly attached under each rear wing 6, 7. The undercarriage 21 can be retractable and can be housed within wing boxes. Towards the front end 3 the semi-convertible rotorcraft 1 comprises a front, retractable, wheeled landing gear 24 at the bottom area 22.

The propellers 12, 13 are each fixedly mounted at the tip of one of each canard-wing 8, 9 respectively. The propellers 12, 13 are allocated essentially longitudinally ahead of the cabin 5. As a result, the cabin 5 is not hit in case of a blade loss during horizontal flight.

According to Figure 3 the respective thrust vectors of the propellers 12, 13 are oriented in an upright direction parallel to the main rotor axis with the rotation axis 14 of the propellers 12, 13 oriented vertically, parallel to the Z-axis 20, as it might be the case in a full stop mode of the semi-convertible rotorcraft 1 once landed on a ground 240. The rotation plane of the propellers 12-13 is parallel to the horizontal plane X-Y.

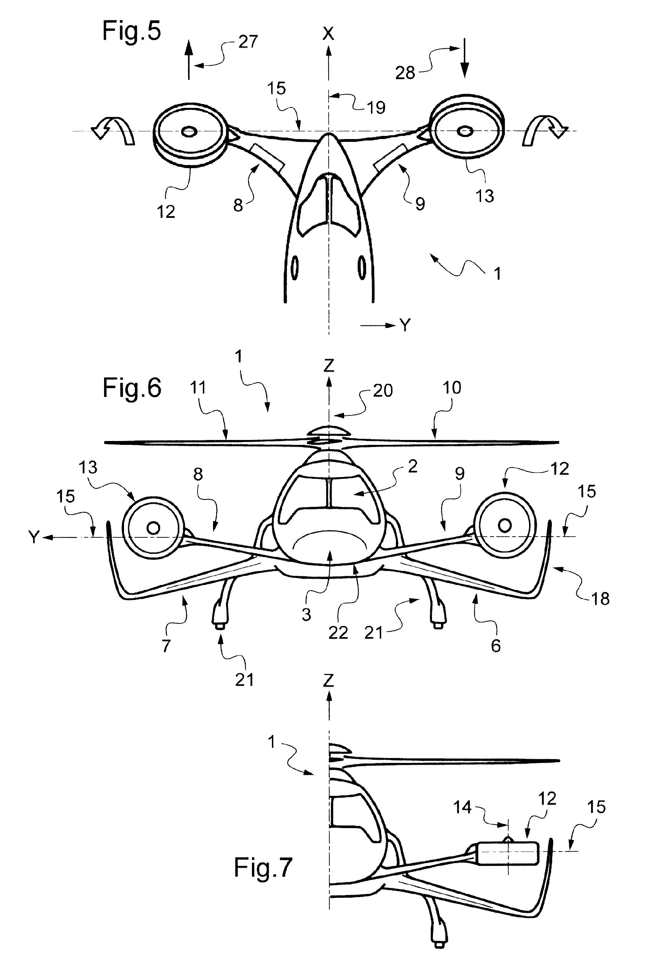

According to Figures 4, 5 the propellers 12, 13 are shown with opposed tilt angles relative to the horizontal plane in a position for generating anti-torque for compensation of the torque from the main rotor 10 during hovering and vertical flight, such as landing or take-off of the semi-convertible rotorcraft 1. By means of a tilt operation of the left propeller 12 around the common transverse tilt axis 15 and a simultaneous, opposing tilt operation of the right propeller 13, a couple arises from horizontal thrust components 27 and 28 to counteract the torque of the main rotor. One of the propellers 12, 13 is rotated by an upwards tilt "+A" while the other of the propellers 13, 12 is rotated by a downwards tilt "-A". The angle value 47 of one propeller 12, 13 is therefore opposed to the one of the other propeller 13, 12.

The left thrust vector 25 of the left propeller 12 can be decomposed to a lift component 29 and a horizontal component 27. The right thrust vector 26 of the right propeller 13 can be decomposed to an equal lift component 29 and a further horizontal component 28, which is equal in magnitude but has the opposite direction relative to the horizontal component 27 of the propeller 12. The respectively opposed horizontal thrust components 27 and 28 generate a couple that counteracts the main rotor torque to the fuselage 2.

According to Figure 6 the semi-convertible rotorcraft 1 is shown in a horizontal flight mode with the respective thrust vectors of the propellers 12, 13 being oriented parallel to its roll axis 20. The canard wings 8, 9 are fixed to the fuselage 2 within the bottom area 22 of the fuselage 2. The canard wings 8, 9 are preferably interconnected by means of a common center box (not shown) allocated within a lower portion next to the bottom area 22 of the fuselage 2. The canard wings 8, 9 are dihedral in order to ensure a vertically raised location of the resulting thrust vector aligned to the vertical position of the semi-convertible rotorcraft's center of gravity on the one hand, and to minimize interactions with anhedral main wings 6, 7 on the other. The fixed main undercarriage 21 is integrated within the main wings 6, 7.

According to Figure 7 the front left propeller 12 is pivoted around the transversal axis 15 of the semi-convertible rotorcraft 1 to provide for the front left propeller 12 a rotation axis 14 oriented upwards and essentially parallel to the rotational axis 20 of the main rotor 10. The rotation axis 14 of the propellers 12, 13 oriented vertically, parallel to the Z-axis 20, might be the case in a full stop mode of the semi-convertible rotorcraft 1 once landed on ground.

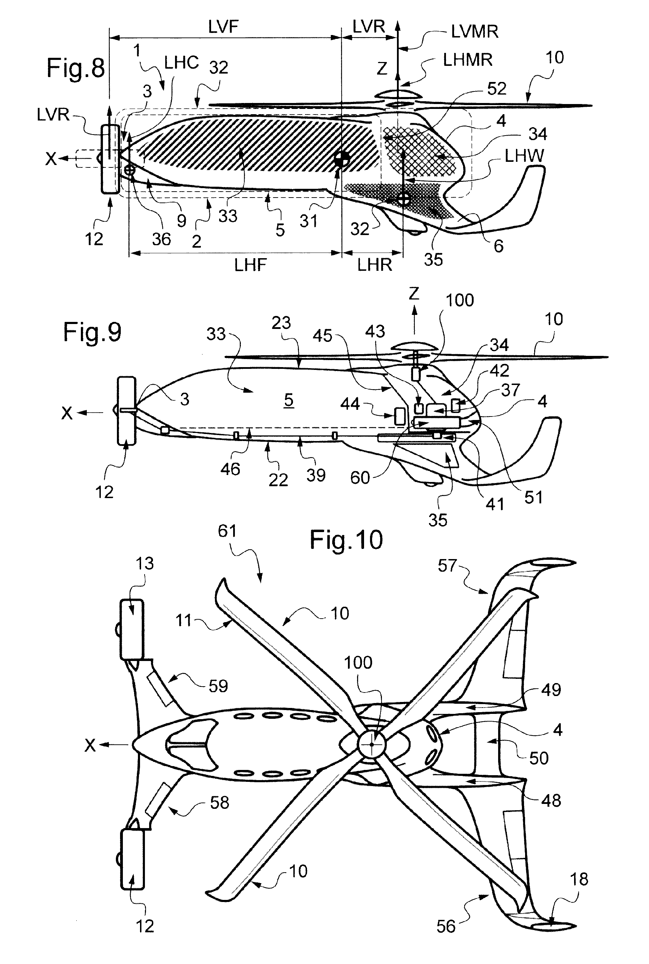

According to Figure 8 the semi-convertible rotorcraft 1 comprises the cabin passenger area 33 within the cabin 5, the rear fuselage area 34 between the cabin rear end 52 and the rear end 4 of the fuselage 2. A tank area 35 is provided at the lower portion of the fuselage 2 and a major part of the wing boxes. By placing important system masses, such as main wings 6, 7, main undercarriage 21, main rotor 10, engines, systems and fuel within the rear end 4 of the semi-convertible rotorcraft 1, the semi-convertible rotorcraft's center of gravity 31 is allocated in the rear portion of the cabin 5, longitudinally ahead of the rotor mast axis 20 and the center of lift 32 of the main wings 6, 7.

In horizontal flight of the semi-convertible rotorcraft 1, the lift LHC of the canard wings 8, 9, acting on the front center of lift 36, compensates the deviation LHR of the center of gravity 31 from the collective center of lift resulting from the lift LHW of the main wings 6, 7 and the lift LHMR of the main rotor 10. Since this deviation LHR is 3 to 10 times less than the distance LHF between the center of gravity 31 and the front center of lift 36 of the canard wings 8, 9, the lift LHC required by the canard wings 8, 9 is 3 to 10 times less than the sum of lifts LHW and LHMR provided by the main wings 6, 7 and the main rotor 10. In the hover, the total lift is provided by the main rotor 10 and the propellers 12, 13. The lift LVR of the propellers 12, 13 is then used to compensate the deviation LVR of the center of gravity 31 from the lift vector LVMR of the main rotor 10. Since this deviation LVR is 3 to 10 times less than the distance LVF between the center of gravity 31 and the lift vector LVR of the front rotors, the lift required from the propellers LVR is 3 to 10 times less than the lift LVMR required from the main rotor 10. The power of the propellers 12, 13 needed for hovering is less than the power required for propulsion during forward flight. Since the power of the main rotor 10 is reduced during horizontal flight, power can be transferred to the propellers 12, 13 for propulsion.

According to Figure 9 systems and most of heavy components of the semi-convertible rotorcraft 1 are arranged at the rear portion 34 of the fuselage 2. Such components comprise, among others, the power plant 51 with engines 60, the gear box 37 a central fuel tank 41, the wing fuel tanks 35, oil 43, hydraulics 42, generators and avionics 44. In case of electrically powering the propellers 12, 13, the associated electrical equipment like generators and batteries are preferably arranged in the rear portion 34 of the fuselage 2 as well. The engines 60, gear box 37 and fuel tanks 41 are preferably placed close to the bottom area 22 close to a floor structure 46 in the fuselage 2 of the semi-convertible rotorcraft 1. The fuselage 2 is hence free of critical masses above the cabin passenger area 33. A drive shaft 39 extends from the gear box 37 to the canard wings 12, 13 for driving of the propellers 12, 13. The tilt control of the propellers 12, 13 is preferably accomplished by means of supplemental hydraulic or electrical actuators (not shown). The rear portion 34 is separated from the cabin 5 by a firewall 45, which can be designed as a rear bulkhead for high-attitude applications.

The mast 100 for the main rotor 10 is mounted in the rear portion 34 of the fuselage 2 in the rear ¼ of the entire length of the fuselage 2 from the front end 3 to the rear end 4.

A bottom half of the fuselage 2 is below a longitudinal line essentially in the middle between the bottom area 22 and the top area 23.

According to Figure 10 an alternative semi-convertible rotorcraft 61 is provided with rear main wings 56, 57 connected to the rear part 34 and lower part 22 of the fuselage 2 by means of two longitudinal tail booms 48 and 49 respectively extending further rearwards from the rear part 34 of the fuselage 2. The rear main wings 56, 57 are transversely interconnected via the longitudinal tail booms 48, 49 by a central wing box 50 that takes the bending moments of the rear main wings 56, 57. In comparison to the embodiment of Figure 1, the surface area of the rear main wings 56, 57 in figure 10 is 10% to 50% smaller than the main wings 6, 7, whereas the surface area of the alternative canard wings 58, 59 is 10% to 50% larger than the canard wings 8, 9, hence providing a larger amount of lift resembling aircraft tandem wing configurations. The center of lift of the rear main wings 56, 57 is located further rearwards and hence distant from the center of gravity. The downwash masking from the main rotor 10 of the alternative semi-convertible rotorcraft 61 is 10% to 50% less in comparison to the concept in Fig. 1, the efficiency of the vertical fins 18 at the tip of the wings 6, 7 is 10% to 50% larger and the interference with the propellers 12-13 might be 5% to 20% smaller.

### Reference List

- 1: semi-convertible rotorcraft
- 2: fuselage
- 3: front end
- 4: rear end
- 5: cabin
- 6, 7: main wings
- 8, 9: canard wing
- 10: main rotor
- 11: rotor blades
- 12, 13: propulsive device
- 14: thrust vector
- 15: pitch/transversal axis
- 16: tip end
- 17: control surfaces
- 18: vertical tails
- 19: roll axis
- 21: undercarriage
- 22: bottom area
- 23: top area
- 24: wheeled landing gear
- 25: left thrust vector
- 26: right thrust vector
- 27,28: horizontal components
- 29: lift component
- 31: center of gravity
- 32: center of lift
- 33: passenger area
- 34: rear fuselage area
- 35: tanks
- 36: front center of lift
- 37: gear box
- 39: drive shaft
- 41: fuel tank
- 42: hydraulics
- 43: oil
- 44: generators and avionics
- 45: firewall
- 46: floor structure
- 47: angle value
- 48,49: tail booms
- 50: center wing box
- 51: power plant
- 52: cabin rear end
- 56,57: alternative rear main wings
- 58,59: alternative canard wings
- 60: engines
- 61: alternative semi-convertible rotorcraft
- 100: mast
- 110: trajectory
- 240: ground
- Z,20: vertical axis

## Claims

1. A semi-convertible rotorcraft (1, 61) comprising:
- a fuselage (2) with a cabin (5) inside, a rear end (4) and a front end (3),
- a longitudinal roll axis (19) extending through the rear end (4) and the front end (3), said roll axis (19) and a pitch axis (15) transversal to said roll axis (19) define an essentially horizontal plane (X, Y),
- at least one power plant (51) arranged inside the fuselage (2),
- a main rotor (10) mounted onto the fuselage (2) and driven by said power plant (51),
- at least one pair of fixed main wings (6, 7, 56, 57) in the essentially horizontal plane (X, Y),
- at least one pair of canard wings (8, 9, 58, 59), each canard wing (8, 9, 58, 59) of said at least one pair being attached to opposed sides at the front end (3) of the fuselage (2) in a further essentially horizontal plane, and
- at least two propulsive devices, such as propellers (12, 13) or jets; said at least two propulsive devices (12, 13) providing thrust and anti-torque; each propulsive device (12, 13) being opposed to another of said at least two propulsive devices (13, 12) relative to the fuselage (2) in the essentially horizontal plane (X, Y); wherein
- said power plant (51) is arranged longitudinally towards the rear end (4) inside said fuselage (2) behind said cabin (5) and in a bottom half of said fuselage (2) ; and
- each of said at least two propulsive devices (12, 13) is mounted on a portion of one respective front-end mounted canard wing (8, 9, 58, 59) distal to the fuselage (2) and each of said at least two propulsive devices (12, 13) are independently tiltable around the pitch axis (15).

2. The semi-convertible rotorcraft (1, 61) according to claim 1, wherein each main wing (6, 7, 56, 57) of said at least one pair of main wings (6, 7, 56, 57) is fixed to opposed sides of the fuselage (2).

3. The semi-convertible rotorcraft (1, 61) according to claim 1, wherein said main rotor (10) has a rotor mast (100) mounted longitudinally behind said cabin (5) towards the rear end (4) of said fuselage (2).

4. The semi-convertible rotorcraft (1) according to claim 1, wherein said at least one pair of main wings (6, 7) are arranged longitudinally towards the rear end (4) of the fuselage (2) at least partly behind said cabin (5) and at least partly below said fuselage (2).

5. The semi-convertible rotorcraft (1, 61) according to claim 1, wherein during vertical flight said at least two propulsive devices (12, 13) are tiltable to angles (47) between 60° and 120° with respect to the aircraft's roll axis (19), and during horizontal flight said at least two propulsive devices (12, 13) are tiltable between 0° and ±30° with respect to the aircraft's roll axis (19).

6. The semi-convertible rotorcraft (1, 61) according to claim 5, wherein said at least two propulsive devices (12, 13) are tiltable with opposing tilt angles (47).

7. The semi-convertible rotorcraft (1, 61) according to claim 1, wherein said respective canard wings (8, 9, 58, 59) are fixedly mounted on the fuselage (2), said at least two propulsive devices (12, 13) being independently tiltable with respect to the canard wings (8, 9, 58, 59) around the pitch axis (15).

8. The semi-convertible rotorcraft (1, 61) according to claim 1, wherein said at least two propulsive devices (12, 13) are each fixedly mounted respectively onto one of said canard wings (8, 9, 58, 59), each canard wing (8, 9, 58, 59) with its corresponding propulsive device (12, 13) being tiltable around the pitch axis (15).

9. The semi-convertible rotorcraft (1, 61) according to claim 1, wherein vertical fins (18) are arranged at the end portion of the fixed main wings (6, 7, 56, 57).

10. The semi-convertible rotorcraft (1) according to claim 1, wherein a wing box volume (35) of the main wings (6, 7) is usable as fuel housing.

11. The semi-convertible rotorcraft (1) according to claim 1, wherein the wing box volume (35) of the main wings (6, 7) is usable for the housing of a retractable landing gear (21) or skid.

12. The semi-convertible rotorcraft (61) according to claim 1, wherein the main wings (56, 57) are arranged behind the fuselage (2), the main wings (56, 57) being connected to each other by a central wing box (50) and the main wings (56, 57) and the central wing box (50) being attached to the fuselage (2) by means of longitudinal tail booms (48, 49).

13. The semi-convertible rotorcraft (1, 61) according to claim 1, wherein said at least two propulsive devices (12, 13) are ducted or unducted propellers or ducted fans.

14. The semi-convertible rotorcraft (1, 61) according to claim 1, wherein said at least two propulsive devices (12, 13) are powered by the engines (60) and the gear box (37) of the powerplant (51) by means of drive shafts (46) extending from the powerplant (51) to the canard wings (8, 9, 58, 59).

15. The semi-convertible rotorcraft (1, 61) according to claim 1, wherein said at least two propulsive devices (12, 13) are powered by electrical motors and the corresponding generators are housed in the vicinity of the powerplant (51).
